Europäisches Patentamt

European Patent Office

Office européen des brevets

(11) Veröffentlichungsnummer: **0 212 580**
**A2**

(12) # EUROPÄISCHE PATENTANMELDUNG

(21) Anmeldenummer: **86111265.4**

(51) Int. Cl.⁴: **A22B 5/20**

(22) Anmeldetag: **14.08.86**

(30) Priorität: **14.08.85 DE 3529205**

(43) Veröffentlichungstag der Anmeldung:
**04.03.87 Patentblatt 87/10**

(84) Benannte Vertragsstaaten:
**AT BE CH DE FR GB IT LI NL SE**

(71) Anmelder: **Banss Maschinenfabrik GmbH & Co. KG**
**Industriestrasse**
**D-3560 Biedenkopf(DE)**

(72) Erfinder: **Rademacher, Rolf**
**Schillerweg 6**
**D-3560 Biedenkopf(DE)**
Erfinder: **Kaufman, Siegfried**
**Hauptstrasse 19**
**D-3563 Dautphetal(DE)**

(74) Vertreter: **Klunker . Schmitt-Nilson . Hirsch**
**Winzererstrasse 106**
**D-8000 München 40(DE)**

(54) **Vorrichtung zum Abtrennen des Kopfes von Schlachttierkörpern, insbesondere Rindern.**

(57) Vorrichtung zum Abtrennen des Kopfes von hängend kontinuierlich weiterbewegten Schlachttierkörpern, insbesondere Rindern, bei der ein mechanisiertes Trennwerkzeug (30) von einer aufrechten Säule (22) getragen ist; die Säule (22) zwischen einer Betriebsstellung,in der das Trennwerkzeug (30) mit dem Halsbereich (36) des jeweiligen Tierkörpers (6) in Eingriff ist, und einer Ruhestellung, in der sich das Trennwerkzeug (30) außerhalb des Weiterbewegungsraums der Tierkörper (6) befindet, bewegbar ist, und die Säule (22) mit einer der Weiterbewegungsgeschwindigkeit der Tierkörper (6) entsprechenden Geschwindigkeit in Richtung der Weiterbewegung der Tierkörper (6) bewegbar ist.

EP 0 212 580 A2

FIG. 1

FIG. 2

## Vorrichtung zum Abtrennen des Kopfes von Schlachttierkörpern, insbesondere Rindern

Die Erfindung bezieht sich auf eine Vorrichtung zum Abtrennen des Kopfes von hängend kontinuierlich weiterbewegten Schlachttierkörpern, insbesondere Rindern.

Der Arbeitsablauf in Schlachthöfen ist in der Regel so, daß die zu schlachtenden Tiere zunächst, beispielsweise mittels elektrischem Strom, Schuß, Kopfschlag oder Betäubungsgas, betäubt werden, dann an den Hinterbeinen aufgehängt und abgestochen werden, dann im Brustbereich halbierend geöffnet werden, ausgeweidet werden, dann längs der Wirbelsäule halbiert werden und schließlich gegebenenfalls weiter zerlegt werden. Vor dem Öffnen des Brustbereichs werden bei vielen Arten von Schlachttieren der Kopf abgetrennt und die Haut abgezogen.

Vom Abstechen bis zum Halbieren werden die Schlachttiere, zumindest für einen Großteil der Bearbeitungsvorgänge, kopfunter hängend längs einer Transportbahn, in der Regel einer Rohrbahn, weiterbewegt.

Das Abtrennen der Köpfe von Schlachttierkörpern wurde bisher in der Regel teilmechanisiert durchgeführt, indem beispielsweise ein geeignetes Trennwerkzeug, wie beispielsweise eine motorisch angetriebene Säge o.dgl., von Hand auf den jeweiligen Schlachttierkörperhals zur Einwirkung gebracht wurde.

Der Erfindung liegt die Aufgabe zugrunde, das Abtrennen des Kopfes von hängend kontinuierlich weiterbewegten Schlacht tierkörpern zu rationalisieren.

Zur Lösung dieser Aufgabe ist erfindungsgemäß vorgesehen, daß ein mechanisiertes Trennwerkzeug von einer aufrechten Säule getragen ist, daß die Säule zwischen einer Betriebsstellung, in der das Trennwerkzeug mit dem Halsbereich des jeweiligen Tierkörpers in Eingriff ist, und einer Ruhestellung, in der sich das Trennwerkzeug außerhalb des Weiterbewegungsraums der Tierkörper befindet, bewegbar ist, und daß die Säule mit einer der Weiterbewegungsgeschwindigkeit der Tierkörper entsprechenden Geschwindigkeit in Richtung der Weiterbewegung der Tierkörper bewegbar ist.

Die Erfindung schafft also eine Vorrichtung, mit der sich der Kopf von weiterbewegten Schlachttierkörpern höhergradig mechanisiert unter Einsparung menschlicher Arbeitskraft abtrennen läßt. Die Vorrichtung kann teilautomatisch arbeitend oder sogar bis hin zur vollautomatischen Arbeitsweise ausgebildet sein, so daß überhaupt keine menschliche Arbeitskraft dort mehr benötigt wird. Der Begriff "aufrechte Säule" bedeutet nicht, daß diese zwingend senkrecht ist, sondern soll nur eine generelle Ausrichtung der Säule von oben nach unten bedeuten. In der Betriebsstellung ist jedoch die Säule vorzugsweise im wesentlichen senkrecht; die hierbei wesentlichen Gesichtspunkte werden weiter unten noch detaillierter ausgeführt.

In bevorzugter Ausgestaltung der Erfindung ist das Trennwerkzeug aufwärts und abwärts beweglich von der Säule getragen. Dies ist häufig günstig, um das Trennwerkzeug auf unterschiedliche Schlachttierkörperlängen einstellen und/oder die optimale Abtrennstelle anfahren zu können. Das Trennwerkzeug ist vorzugsweise eine mechanisiert betätigte Schneidzange. Die Schneidzange kann so ausgebildet sein, daß der Kopf mit einem einzigen Schneidzangenschließen abgeschnitten wird. Die Schneidzange ist vorzugsweise pneumatisch oder hydraulisch für das Schließen und Öffnen der Schneidzange angetrieben, wobei jedoch auch andere Antriebsarten, beispielsweise elektrisch, möglich sind.

Zur Bewegung des Trennwerkzeugs in Längsrichtung der Säule eignet sich besonders eine Zylinder-Kolben-Einheit.

Zur Bewegung der Säule zwischen ihrer Ruhestellung und ihrer Betriebsstellung ist diese vorzugsweise um eine im wesentlichen in Weiterbewegungsrichtung der Tierkörper verlaufende Achse schwenkbar. Diese Bewegbarkeit der Säule ist kontruktiv besonders unkompliziert zu verwirklichen und bringt das von der Säule getragene Trennwerkzeug auf einfache Weise für diejenigen Zeiten aus dem Weiterbewegungsraum der Tierkörper, in denen kein Kopfabtrennvorgang stattfindet. Es ist beispielsweise aber auch möglich,die Säule translatorisch zwischen ihrer Ruhestellung und ihrer Betriebsstellung zu bewegen. Die Säule ist in ihrer Betriebsstellung vorzugsweise im wesentlichen senkrecht. Die schwenkende Bewegung der Säule in die Betriebsstellung hat ferner den Vorteil, daß sich das Trennwerkzeug auf einer gekrümmt nach oben verlaufenden Kreisbahn an den Tierkörper heranbewegt, wodurch ggf. störende Tierkörperbereiche besonders gut weggedrängt werden können.

Für die Bewegung der Säule zwischen ihrer Ruhestellung und ihrer Betriebsstellung eignet sich besonders eine Zylinder-Kolben-Einheit.

Die Säule ist vorzugsweise hängend angeordnet, wodurch der Boden des Schlachthofs frei von störenden Einbauten bleibt. Besonders günstig ist eine hängende Anbringung der Säule an einem im wesentlichen in Weiterbewegungsrichtung der Tierkörper verfahrbaren Gestell, um hiermit zugleich die Bewegbarkeit der Säule in Richtung der Weiterbewegung der Tierkörper zu schaffen.

Die Bewegung der Säule in Richtung der Weiterbewegung der Tierkörper mit einer der Weiterbewegungsgeschwindigkeit der Tierkörper entsprechenden Geschwindigkeit wird vorzugsweise mittels derjenigen Förderkette bewerkstelligt, die, in der Regel oberhalb der Transportbahn der Tierkörper verlaufend, die Weiterbewegung der Tierkörper längs der Transportbahn besorgt. Eine konstruktiv besonders glückliche Lösung besteht darin, einen aus-und einfahrbaren Bolzen vorzusehen, der im ausgefahrenen Zustand in die Bewegungsbahn von Mitnehmern der Förderkette ragt, so daß er und mit ihm die Säule bzw. das die Säule tragende Gestell mit der Geschwindigkeit der Förderkette mitgenommen werden. Zum Aus-und Einfahren des Bolzens kann eine Zylinder-Kolben-Einheit vorgesehen sein. Es gibt jedoch auch andere Möglichkeiten zur Bewegung der Säule entsprechend der Weiterbewegungsgeschwindigkeit der Tierkörper, beispielsweise eine entsprechend gesteuerte, pneumatische oder hydraulische Zylinder-Kolben-Einheit.

Zum Zurückbewegen der Säule entgegen der Weiterbewegungsrichtung der Tierkörper nach jeweils durchgeführtem Brustöffnungsvorgang ist vorzugsweise eine Zylinder-Kolben-Einheit vorgesehen.

Vorstehend sind mehrfach Zylinder-Kolben-Einheiten als Antriebsmittel für diverse Bewegungen angesprochen worden. Diese Zylinder-Kolben-Einheiten sind vorzugsweise, wenn nichts anderes erwähnt ist, als pneumatische Einheiten vorgesehen.

Insbesondere wenn Tierkörper mit wesentlich wechselnder Länge verarbeitet werden sollen, ist es vorzuziehen, daß eine Tierkörperlängenfeststelleinrichtung vorhanden ist. Aufgrund der Feststellung der jeweiligen Tierkörperlänge kann man nach Erfahrungswerten bestimmen, in welcher Höhe das Trennwerkzeug für den Trennvorgang mit dem Tierkörper in Eingriff zu bringen ist. Insbesondere bei vollautomatischer Arbeitsweise kann man die Arbeitsposition des Trennwerkzeugs automatisch aufgrund des Festellungswerts der Tierkörperlängenfeststelleinrichtung steuern. Als besonders geeignete Tierkörperlangenfeststelleinrichtungen kommen mechanische Schalter, Lichtschranken und Ultraschallfühler in Betracht, und zwar vorzugsweise entweder in höhenverfahrbarer Einzelanordnung oder in höhenmäßig gestaffelter Mehrfachanordnung.

Die Erfindung wird im folgenden anhand eines zeichnerisch dargestellten Ausführungsbeispiels noch näher erläutert. Es zeigen:

Fig. 1 eine Ansicht einer Vorrichtung zum Abtrennen des Kopfes eines geschlachteten Rinds, gesehen in Richtung der Weiterbewegungsrichtung des Rinderkörpers;

Fig. 2 eine Draufsicht der Vorrichtung von Fig.1, wobei der in Fig.1 dargestellte Rinderkörper weggelassen ist.

In den Figuren erkennt man eine Rohrbahn 2 im Querschnitt sowie ein darüber in Längsrichtung der Rohrbahn 2 angeordnetes Paar von aufrecht gestellten U-Eisen 4 zur Führung einer nicht dargestellten Förderkette. Ein Rinderkörper 6 mit Kopf 7 hängt mit nicht dargestellten Förderhaken, die über die Rohrbahn 2 greifen, an der Rohrbahn 2, und zwar quer, d.H. ein Hinterbein in Weiterbewegungsrichtung vorn und das andere Hinterbein gespreizt in Weiterbewegungsrichtung hinten. Der Rinderkörper 6 hängt mit den Vorderbeinen nach unten. Die nicht dargestellte Förderkette greift mit einem jeweiligen Mitnehmer hinter den nicht dargestellten Traghaken des in Weiterbewegungsrichtung vorderen Hinterbeins und fördert auf diese Weise den Rinderkörper 6. Längs der langgestreckten Rohrbahn 2 hängen, einer hinter dem anderen, eine Vielzahl von Rinderkörpern 6.

In Blickrichtung der Figuren links neben der Rohrbahn 2 ist ein Rahmen 8 an der nicht dargestellten Schlachthofdecke befestigt. Der Rahmen 8 besitzt ein Paar von quer zur Rohrbahn 2 beabstandeten Laufschienen 10, zwischen denen der Rahmen 8 größtenteils nach unten offen ist. Im Rahmen 8 ist ein Gestell 12 in Längsrichtung der Schienen 10 und der Rohrbahn 2 verfahrbar, und zwar mit Hilfe von vier auf den Schienen 10 abrollenden Rädern 14. Auf einer Seite des Gestells 12 sind die Räder 14 mit einer V-förmigen Umfangsnut versehen und ist die dortige Laufschiene entsprechend profiliert, so daß das Gestell 12 auf diese Weise geführt ist.

Das Gestell 12 trägt auf seiner Unterseite einen quer zur Rohrbahn 2 mittels einer pneumatischen Zylinder-Kolbeneinheit 18 aus-und einfahrbaren Bolzen 16. Der Bolzen 16 ragt im ausgefahrenen Zustand knapp über die Rohrbahn 2 und wird durch einen von der nicht dargestellten Förderkette nach unten ragenden Mitnehmer in Weiterbewegungsrichtung der Rinderkörper mit deren Weiterbewegungsgeschwindigkeit mitgenommen.

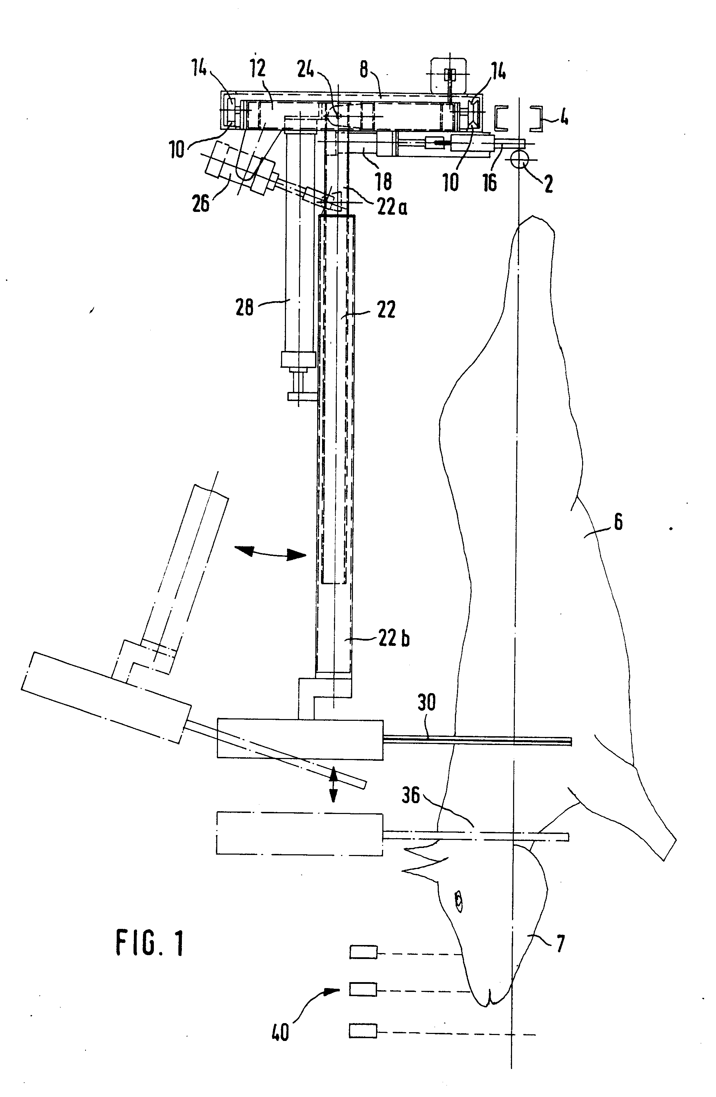

An dem Gestell 12 hängt nach unten eine teleskopartige Säule 22, und zwar mittels eines Gelenks 24 mit parallel zur Rohrbahn 2 verlaufender Schwenkachse. Am Gestell 12 ist ferner eine pneumatische Zylinder-Kolben-Einheit 26 angelenkt, die mit dem Ende ihrer Kolbenstange an der Säule 22 im Abstand zum Gelenk 24 angelenkt ist. Mittels der Zylinder-Kolben-Einheit 26 kann die Säule 22 zwischen einer im wesentlichen senkrechten Betriebsstellung und einer in Fig. 1 gestrichelt angedeuteten Ruhestellung, in der das untere Ende der Säule 22 ein Stück von dem Rinderkörper weggeschwenkt ist, bewegt werden.

Die Säule 22 weist einen oberen, am Gelenk 24 befestigten Teil 22a und einen unteren, teleskopartig relativ zum Teil 22a bewegbaren Teil 22b auf. Zum Antrieb der Bewegung des Säulenteils 22b relativ zum Säulenteil 22a dient eine pneumatische Zylinder-Kolben-Einheit 28.

Am unteren Ende des Säulenteils 22b ist eine pneumatisch oder hydraulisch angetriebene, im wesentlichen in einer waagerechten Ebene arbeitende Schneidzange 30 als Trennwerkzeug zum Abtrennen des Kopfes 7 des Rinderkörpers 6 befestigt.

Die Arbeitsweise der Vorrichtung ist wie folgt: Zu Beginn eines Arbeitszyklus wird der Bolzen 16 ausgefahren. Bei Mitnahme des Bolzens 16 durch einen ankommenden Mitnehmer ist automatisch eine Ausrichtung der Schneidzange 30 etwa mit dem Rinderkörper 6 gewährleistet. Während das Gestell 12 und mit ihm die Säule 22 mit der Weiterbewegungsgeschwindigkeit des jeweiligen Rinderkörpers 6 in Längsrichtung der Rohrbahn 2 in dem Rahmen 8 bewegt wird, wird die Säule 22 aus der vom Rinderkörper 6 entfernten Ruhestellung in die im wesentlichen senkrechte Betriebsstellung geschwenkt. Im Verlauf dieser Schwenkbewegung passieren die vorderen Bereiche der beiden Arme der geöffneten Schneidzange 30 von der Rückenseite her beidseitig den Rinderkörper 6, und zwar im Bereich ein Stück hinter bzw. wegen des hängenden Zustands des Rinderkörpers 6 oberhalb des engsten Halsbereichs 36 des Rinderkörpers 6, wobei etwaige im Wege befindliche Fleischpartien nach oben zurückgedrängt werden. Noch während oder nach Beendigung der beschriebenen Schwenkbewegung der Säule 22 wird der untere Säulenteil 22b nach unten bewegt, bis die Schneidzange 30 an dem hinteren bzw. oberen Ende des Kopfes 7 anliegt und sich im engsten Halsbereich 36 befindet, gesteuert beispielsweise durch einen elektrischen Schalter, der auf den zunehmenden Bewegungswiderstand in dieser Lage anspricht. Dann wird die Schneidzange 30 geschlossen und so der Kopf 7 abgetrennt. Nach Beendigung dieses Abtrennens wird die Säule 22 wieder in die Ruhestellung vom Rinderkörper 6 weggeschwenkt und die Schneidzange 30 durch Bewegung des unteren Säulenteils 22b nach oben gefahren. Nach Beendigung des Abtrennens wird ferner der Bolzen 16 eingefahren, so daß das Gestell 12 stehenbleibt. Mittels einer pneumatischen Zylinder-Kolben-Einheit 38 (Fig.2), die zwischen dem Rahmen 8 und dem Gestell 12 wirkt, wird das Gestell 12 entgegen der Weiterbewegungsrichtung der Rinderkörper 6 rasch in die Ausgangsposition des Arbeitszyklus zurückgefahren, wo die Vorrichtung rechtzeitig zur Ankunft des nächsten Rinderkörpers 6 für den nächsten Arbeitszyklus zur Verfügung steht.

Statt die Schneidzange 30 bis zur Zunahme des Bewegungswiderstands nach unten zu fahren oder in Kombination hiermit kann eine Tierkörperlängenfeststelleinrichtung 40 vorgesehen sein, die drei im Abstand übereinander angeordnete Ultraschallsensoren aufweist. Aus der Information, welcher der Sensoren -von unten nach oben gezählt -als erster das Vorhandensein des unteren Tierkörperendes bzw. des unteren Kopfendes in seinem Ultraschallwellenweg feststellt, ergibt sich mit ausreichender Genauigkeit die Tierkörperlänge. Dann weiß man aus Erfahrung mit ausreichender Genauigkeit, wie viel höher man die Arbeitsposition des Trennwerkzeugs vorsehen muß.

**Ansprüche**

1. Vorrichtung zum Abtrennen des Kopfes von hängend kontinuierlich weiterbewegten Schlachttierkörpern, insbesondere Rindern,

dadurch gekennzeichnet, daß ein mechanisiertes Trennwerkzeug (30) von einer aufrechten Säule (22) getragen ist; daß die Säule (22) zwischen einer Betriebsstellung, in der das Trennwerkzeug (30) mit dem Halsbereich (36) des jeweiligen Tierkörpers (6) in Eingriff ist, und einer Ruhestellung, in der sich das Trennwerkzeug (30) außerhalb des Weiterbewegungsraums der Tierkörper (6) befindet, bewegbar ist;

und daß die Säule (22) mit einer der Weiterbewegungsgeschwindigkeit der Tierkörper (6) entsprechenden Geschwindigkeit in Richtung der Weiterbewegung der Tierkörper (6) bewegbar ist.

2. Vorrichtung nach Anspruch 1, dadurch gekennzeichnet, daß das Trennwerkzeug (30) aufwärts und abwärts beweglich von der Säule (22) getragen ist.

3. Vorrichtung nach Anspruch 1 oder 2, dadurch gekennzeichnet, daß das Trennwerkzeug eine mechanisiert betätigte Schneidzange ist.

4. Vorrichtung nach Anspruch 3, dadurch gekennzeichnet, daß die Schneidzange so lang ist, daß der Kopf mit einem Schneidzangenschließen abgetrennt wird.

5. Vorrichtung nach Anspruch 3 oder 4, dadurch gekennzeichnet, daß die Schneidzange pneumatisch oder hydraulisch angetrieben ist.

6. Vorrichtung nach einem der Ansprüche 2 bis 5, dadurch gekennzeichnet, daß zur Bewegung des Trennwerkzeugs (30) eine Zylinder-Kolben-Einheit - (28) vorgesehen ist. .

7. Vorrichtung nach einem der Ansprüche 1 bis 6, dadurch gekennzeichnet, daß die Säule (22) zur Bewegung zwischen der Ruhestellung und der Betriebsstellung um eine im wesentlichen in Weiterbewegungsrichtung der Tierkörper (6) verlaufende Achse (24) schwenkbar ist.

8. Vorrichtung nach einem der Ansprüche 1 bis 7, dadurch gekennzeichnet, daß für die Bewegung der Säule (22) zwischen der Ruhestellung und der Betriebsstellung eine Zylinder-Kolben-Einheit (26) vorgesehen ist.

9. Vorrichtung nach einem der Ansprüche 1 bis 8, dadurch gekennzeichnet, daß die Säule (22) hängend an einem im wesentlichen in Weiterbewegungsrichtung der Tierkörper (6) verfahrbaren Gestell (12) angebracht ist.

10. Vorrichtung nach einem der Ansprüche 1 bis 9, dadurch gekennzeichnet, daß die Säule (22) für die Bewegung entsprechend der Weiterbewegung der Tierkörper (6) mit einer Förderkette, die die Weiterbewegung der Tierkörper (6) besorgt, koppelbar ist, vorzugsweise mittels eines aus-und einfahrbaren Bolzens (16), hinter den ein jeweiliger Mitnehmer (20) der Förderkette greift.

11. Vorrichtung nach Anspruch 10, dadurch gekennzeichnet, daß zum Aus-und Einfahren des Bolzens (16) eine Zylinder-Kolben-Einheit (18) vorgesehen ist.

12. Vorrichtung nach einem der Ansprüche 1 bis 11, dadurch gekennzeichnet, daß zum Zurückbewegen der Säule (22) entgegen der Weiterbewegungsrichtung der Tierkörper (6) eine Zylinder-Kolben-Einheit (38) vorgesehen ist.

13. Vorrichtung nach einem der Ansprüche 2 bis 12, gekennzeichnet durch eine Tierkörperlängenfeststelleinrichtung (40), die die Arbeitsposition des Trennwerkzeugs (30) steuert.

FIG. 1